# EUROPÄISCHE PATENTSCHRIFT

(11) **EP 1 470 978 B1**
(45) Veröffentlichungstag und Bekanntmachung des Hinweises auf die Patenterteilung: **31.10.2007**
(21) Anmeldenummer: 04003778.0
(22) Anmeldetag: 19.02.2004
(51) Int. Cl.: B60T 8/00, B60R 16/02, B60T 17/22

(54) **Verfahren und Vorrichtung zur Erkennung eines Fahrzustands**
Method and device for detecting a driving condition
Procédé et dispositif de détection de l'état de marche

(30) Priorität: 22.04.2003 DE 10318111
(43) Veröffentlichungstag der Anmeldung: 27.10.2004
(73) Patentinhaber: Continental Aktiengesellschaft, 30165 Hannover (DE)
(72) Erfinder: Stiller, Alexander, Dr., 30823 Garbsen (DE)

(56) Entgegenhaltungen:
- EP-A- 1 234 741
- DE-A- 10 103 629
- DE-A- 10 135 020
- DE-A- 19 802 041
- DE-A- 19 830 189
- DE-A- 19 856 303
- US-B1- 6 366 844
- US-B1- 6 498 976

## Beschreibung

Die Erfindung betrifft ein Verfahren zur Erkennung eines Fahrzustands, insbesondere eines Kraftfahrzeugs.

Aus dem Stand der Technik sind verschiedene Verfahren und Vorrichtungen zur Ermittlung von kritischen Fahrzuständen bekannt. Aus der DE 19918597A1 ist ein Verfahren zur Reduktion der Kippgefahr von Straßenfahrzeugen bekannt, bei dem ständig ein Kippkoeffizient des Kraftfahrzeuges ermittelt und mit einem vorgegebenen Grenzwert verglichen wird. Bei Überschreiten des Grenzwertes wird automatisch ein Lenkeingriff eingeleitet, der mit abnehmender Kippstabilität zunimmt. Der Kippkoeffizient wird über eine Messung der Reifenauftstandskräfte ermittelt oder durch Messung von Signalen, aus denen die Schwerpunkthöhe des Fahrzeuges und die Querbeschleunigung im Schwerpunkt ermittelbar sind. Als zusätzliche Maßnahme kann ein Bremseingriff eingeleitet werden. Aus den DE 19904219A1, DE 19904216A1, DE 19856303A1, DE 1982936A1, DE10133409A1, DE 10065724A1, DE 10039108A1 sind verschiedene weitere Verfahren und Vorrichtungen zur Ermittlung von kritischen Fahrzuständen beim Fahrbetrieb, insbesondere zur Ermittlung einer Kippneigung, bekannt.

Aus der US 6366844 B1 ist bekannt, zuerst eine Abfrage auf einen überkritischen Wert der Querbeschleunigung durchzuführen und bei unterkritischem Wert den Radschlupf zu bewerten, um auch einen Fahrzustand mit hoher Dachlast zu berücksichtigen.

Der Erfindung liegt demgegenüber die Aufgabe zugrunde, ein verbessertes Verfahren zur Erkennung eines Fahrzustands zu schaffen.

Die der Erfindung zugrunde liegende Aufgabe wird mit den Merkmalen des unabhängigen Patentanspruchs. Bevorzugte Ausführungsformen der Erfindung sind in den abhängigen Patentansprüchen angegeben.

Die vorliegende Erfindung ermöglicht eine Erkennung eines Fahrzustandes aus einer Menge von Fahrzuständen. Dies kann so erfolgen, dass jedem Fahrzustand ein Prüfkriterium zugeordnet ist. Zur Erkennung eines Fahrzustandes werden zunächst mehrere Fahrparameter erfasst. Anhand dieser Fahrparameter werden die Prüfkriterien der Fahrzustände dann ausgewertet.

Erfindungsgemäß erfolgt dies so, dass zunächst das Prüfkriterium des als am gefährlichsten klassifizierten Fahrzustandes ausgewertet wird. Wenn dieses Prüfkriterium nicht erfüllt wird, d. h. der gefährlichste Fahrzustand nicht vorliegt, wird danach das Prüfkriterium des zweitgefährlichsten Fahrzustandes anhand des Fahrparameters ausgewertet.

Die Auswertung der Prüfkriterien schreitet also in zeitlicher Reihenfolge von dem Prüfkriterium des gefährlichsten Fahrzustands zu dem des am wenigsten gefährlichen Fahrzustands fort. Durch diese Reihenfolge der Datenverarbeitung ist sichergestellt, dass besonders gefährliche Fahrzustände mit höchster Priorität, d. h. besonders schnell, erkannt werden können.

Erfindungsgemäß wird zumindest zwischen zwei verschiedenen Fahrzuständen unterschieden: (i) Kippneigung bei einem dynamischen Fahrmanöver, (ii) Kippneigung bei quasi-statischer Kurvenfahrt; vorteilhaft beinhaltet die Menge von Fahrzuständen einen dritten Fahrzustand: (iii) Kippneigung bei Fahrt am Hang oder bei Stehen am Hang.

Dabei wird der Fahrzustand "Kippneigung bei dynamischem Fahrmanöver" als am gefährlichsten, der Fahrzustand "quasi-statische Kreisfahrt" als zweitgefährlichster und der Fahrzustand "Fahrt am Hang oder Stehen am Hang" als der am wenigsten gefährliche Fahrzustand klassifiziert. Entsprechend dieser Klassifizierung werden den verschiedenen Fahrzuständen Prüfkriterien zugeordnet, die anhand von mehreren Fahrparametern laufend ausgewertet werden.

Dabei wird immer zuerst geprüft, ob das Prüfkriterium des Fahrzustandes "Kippneigung bei dynamischem Fahrmanöver" von den Fahrparametern erfüllt wird. Wenn dies nicht der Fall ist, wird danach das Prüfkriterium für den zweitgefährlichsten Fahrzustand und danach das Prüfkriterium für den am wenigsten gefährlichen Fahrzustand ausgewertet.

Als Fahrparameter für die Erkennung eines Fahrzustandes können beispielsweise der Wankwinkel, die Wankwinkelgeschwindigkeit, Querbeschleunigung, Gierrate, der Lenkwinkel und/oder Radaufstandskräfte verwendet werden, die über entsprechende Sensoren erfasst werden.

Nach einer bevorzugten Ausführungsform der Erfindung wird der Wankwinkel durch Auswertung der Signale von Höhensensoren, die den Abstand zwischen einer Radachse und einem Fahrzeugaufbau messen, gewonnen. Aus dem Wankwinkel kann die Wankwinkelgeschwindigkeit ermittelt werden, indem beispielsweise das Wankwinkelsignal durch zwei verschiedene Tiefpassfilter gefiltert wird und die Filterausgänge voneinander subtrahiert werden. Wenn es sich bei dem einen der Filter um einen Filter mit großer Zeitkonstante, d. h. einen so genannten Langzeitfilter, und bei dem anderen Filter um einen Filter mit kleiner Zeitkonstante, d. h. einen so genannten Kurzzeitfilter, handelt, ist das Ausgangssignal proportional zur Wankwinkelgeschwindigkeit.

Nach einer weiteren bevorzugten Ausführungsform der Erfindung ist einem ersten Fahrzustand ein Schwellwert als Prüfkriterium zugeordnet und einem zweiten Fahrzustand ein zweiter Schwellwert als Prüfkriterium zugeordnet, wobei der erste Fahrzustand gefährlicher als der zweite Fahrzustand ist, und der erste Schwellwert so gewählt ist, dass dieser schon erreicht werden kann, ohne dass der zweite Schwellwert überschritten wurde; beispielsweise wird also der erste Schwellwert kleiner als der zweite Schwellwert gewählt. Durch die Wahl eines kleineren Schwellwerts für den gefährlicheren Fahrzustand wird z. B. die größere Kippneigung in dem gefährlicheren Fahrzustand bei den Prüfkriterien berücksichtigt.

Nach einer weiteren bevorzugten Ausführungsform der Erfindung wird bei Erkennung einer der Fahrzustände ein Warnsignal ausgegeben. Dies kann beispielsweise über eine Anzeigevorrichtung in dem Fahrzeugcockpit erfolgen, um den Fahrer entsprechend zu warnen. Zum Beispiel kann das Warnsignal als visuelles oder auch als haptisches und/oder akustisches Signal ausgegeben werden.

Alternativ oder zusätzlich wird nach Erkennung einer der Fahrzustände ein Signal an ein Fahrzeugsteuerungs- und/oder Regelungssystem ausgegeben. Dabei gibt dieses Signal vorzugsweise den erkannten Fahrzustand an, damit das Steuerungs- und/oder Regelungssystem entsprechend angepasst reagieren kann. Wenn beispielsweise ein Fahrzustand mit Kippneigung erkannt wird, kann der Kippneigung durch eine automatische Abbremsung und/oder einen Lenkeingriff und/oder weitere Maßnahmen entgegengewirkt werden. Als Steuerungs- und/oder Regelungssysteme, die hierzu angesprochen werden, kommen insbesondere ein ABS, ESP, aktive Lenkverstellung und/oder Motormanagementsystem in Frage.

Die Anwendung des erfindungsgemäßen Verfahrens ist insbesondere bei Fahrzeugen mit hohem Schwerpunkt, wie z. B. bei Kleintransportern, Vans oder Geländewagen vorteilhaft, da solche Fahrzeuge mit hohem Schwerpunkt bei dynamischen Fahrmanövern, d. h. bei plötzlichen Richtungswechsel oder während einer Kurven- oder Kreisfahrt zum Kippen neigen können. Mit dem erfindungsgemäßen Verfahren kann rechtzeitig eine Kippgefahr erkannt werden, um schnell entsprechende Gegenmaßnahmen zu treffen, wie z. B. eine Reduktion des Motormoments, ein zusätzliches Bremsmoment und/oder eine Adaption der Dämpfercharakteristik.

Im Weiteren werden bevorzugte Ausführungsformen der Erfindung mit Bezugnahme auf die Zeichnungen näher erläutert. Es zeigen:
- Figur 1: ein Flussdiagramm eines Verfahrens zur Erkennung von Fahrzuständen,
- Figur 2: ein Blockdiagramm einer Vorrichtung zur Erkennung von Fahrzuständen,
- Figur 3: eine schematische Darstellung eines Kraftfahrzeugs mit einer weiteren Ausführungsform einer Vorrichtung zur Erkennung von Fahrzuständen,
- Figur 4: eine Ausführungsform einer Entscheidungsmatrix für die Erkennung von Fahrzuständen,
- Figur 5: eine Filtervorrichtung zur Ermittlung eines Wankwinkelgeschwindigkeitssignals,
- Figur 6: ein Diagramm zur Veranschaulichung der Arbeitsweise der Vorrichtung der Figur 5.

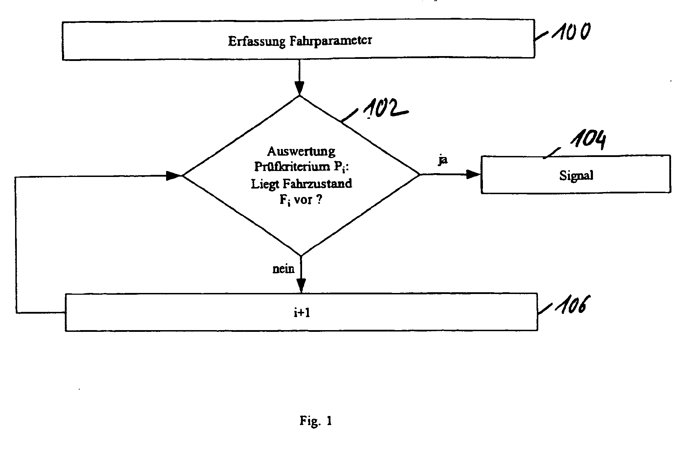

Figur 1 zeigt ein Flussdiagramm zur Erkennung eines Fahrzustands. In dem Schritt 100 werden ein oder mehrere Fahrparameter erfasst. Beispielsweise werden der Wankwinkel, die Wankgeschwindigkeit, Querbeschleunigung, Gierrate, der Lenkwinkel und/oder die Radaufstandskräfte eines Kraftfahrzeugs erfasst. Auf der Grundlage dieser Fahrparameter wird dann in dem Schritt 102 geprüft, ob ein Fahrzustand Fᵢ aus einer Menge von Fahrzuständen F= {F₁, F₂, ..., F_{N}} vorliegt.
Jedem dieser Fahrzustände der Menge F ist dabei ein Prüfkriterium Pᵢ zugeordnet. Wenn ein Prüfkriterium Pᵢ durch die erfassten Fahrparameter erfüllt wird, so bedeutet dies, dass der Fahrzustand Fᵢ vorliegt.

Die Fahrzustände sind hinsichtlich ihrer Gefährlichkeit klassifiziert und entsprechend sortiert. Der gefährlichste Fahrzustand ist der Fahrzustand F₁; der am wenigsten gefährliche Fahrzustand ist der Fahrzustand F_{N}, wobei die dazwischenliegenden Fahrzustände F₂ bis F_{N-1} eine in dieser Reihenfolge abnehmende Gefährlichkeit aufweisen.

Die Prüfung in dem Schritt 102 erfolgt so, dass zunächst geprüft wird, ob der gefährlichste Fahrzustand F₁ vorliegt, indem das entsprechende Prüfkriterium P₁ mittels der in dem Schritt 100 erfassten Fahrparameter ausgewertet wird. Wird das Prüfkriterium P₁ durch die Fahrparameter erfüllt, so bedeutet dies, dass der Fahrzustand F1 vorliegt. Daraufhin wird in dem Schritt 104 ein Signal ausgegeben.

Bei dem Signal 104 kann es sich um ein Warnsignal für den Fahrer handeln, welches beispielsweise über eine Anzeige über die Instrumententafel des Kraftfahrzeugs ausgegeben wird.

Wenn hingegen das Prüfkriterium P₁ nicht erfüllt wird, wird der Index i in dem Schritt 106 inkrementiert, um danach in dem Schritt 102 das Prüfkriterium P₂ für den weniger gefährlichen Fahrzustand F₂ auszuwerten.

Dieser Ablauf wird solange durchgeführt, bis entweder einer der Fahrzustände erkannt worden ist, und ein Signal in dem Schritt 104 ausgegeben worden ist, oder bis festgestellt worden ist, dass keiner der Fahrzustände aus der Menge F vorliegt.

Besonders vorteilhaft ist dabei, dass die Prüfung, ob der gefährlichste Fahrzustand F₁ vorliegt, zuerst vorgenommen wird, da für diesen Fall das Signal 104 entsprechend schnell ausgegeben wird.

Vorzugsweise beinhaltet das Signal, das in dem Schritt 104 ausgegeben wird, eine Angabe des erkannten Fahrzustandes. Wenn beispielsweise der gefährlichste Fahrzustand erkannt worden ist, wird gleichzeitig ein haptisches und ein akustisches Warnsignal für den Fahrer ausgegeben. Bei einem weniger gefährlichen Fahrzustand wird beispielsweise nur ein akustisches Warnsignal ausgegeben und bei dem am wenigsten gefährlichen Fahrzustand nur ein visuelles Warnsignal.

Alternativ oder zusätzlich kann das in dem Schritt 104 ausgegebene Signal in ein Steuerungs- und/oder Regelungssystem des Fahrzeugs eingegeben werden, welches dann entsprechend des erkannten Fahrzustandes reagieren kann, um die Gefahr zu reduzieren. Beispielsweise kann eine automatische Abbremsung vorgenommen werden, um eine Kippneigung des Fahrzeugs zu reduzieren.

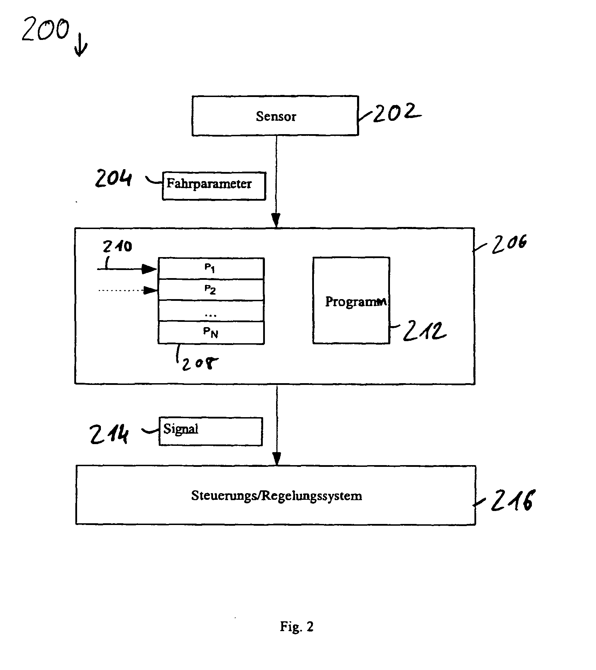

Die Figur 2 zeigt ein Blockdiagramm eines entsprechenden Sicherheitssystems 200. Das Sicherheitssystem 200 hat einen oder mehrere Sensoren 202 zur Erfassung eines oder mehrerer der Fahrparameter 204 eines Kraftfahrzeugs. Der oder die Fahrparameter 204 werden in ein Auswertemodul 206 eingegeben.

Das Auswertemodul 206 hat einen Speicherbereich 208, in dem die Prüfkriterien P₁, P₂, ..., P_{N} in dieser Reihenfolge abgespeichert sind. Nach der Initialisierung des Sicherheitssystems 200 zeigt ein Zeiger 210 auf die Adresse in dem Speicherbereich 208, in dem das Prüfkriterium P₁ für den gefährlichsten Fahrzustand F₁ gespeichert ist.

Das Auswertemodul 206 hat ferner einen Speicherbereich 212, in dem ein Programm gespeichert ist. Das Programm in dem Speicherbereich 212 dient zur Auswertung der in dem Speicherbereich 208 gespeicherten Prüfkriterien Pᵢ mit Hilfe der Fahrparameter 204.

Wenn eines der Prüfkriterien Pᵢ durch die Fahrparameter 204 erfüllt wird, d. h. der entsprechende Fahrzustand Fᵢ erkannt worden ist, erzeugt das Programm des Speicherbereichs 212 ein entsprechendes Signal 214, welches in ein fahrdynamisches Steuerungs- und/oder Regelungssystems des Fahrzeugs eingegeben wird. Auf der Grundlage des Signals 214 kann dann das Steuerungs- und/oder Regelungssystem 216 beispielsweise einen Fahrwerksparameter des Kraftfahrzeugs verändern, um beispielsweise eine Kippneigung des Fahrzeugs zu reduzieren. Alternativ oder zusätzlich kann auf der Grundlage des Signals 214 auch ein Warnsignal für den Fahrer des Fahrzeugs erzeugt werden.

Im Betrieb gibt der Sensor 202 ständig messtechnisch und/oder durch Signalauswertung erfasste Fahrparameter 204 ab. Das Programm 212 prüft zunächst, ob der oder die Fahrparameter 204 das Prüfkriterium P₁ erfüllen. Ist dies der Fall, so wird das Signal 214 ausgegeben. Ist das Gegenteil der Fall, so wird der Zeiger 210 inkrementiert, sodass er auf den benachbarten Adressbereich in dem Speicher 208 zeigt, in dem das nächste Prüfkriterium P₂ gespeichert ist. Auch dieses Prüfkriterium P₂ wird dann anhand der Fahrparameter 204 überprüft usw.

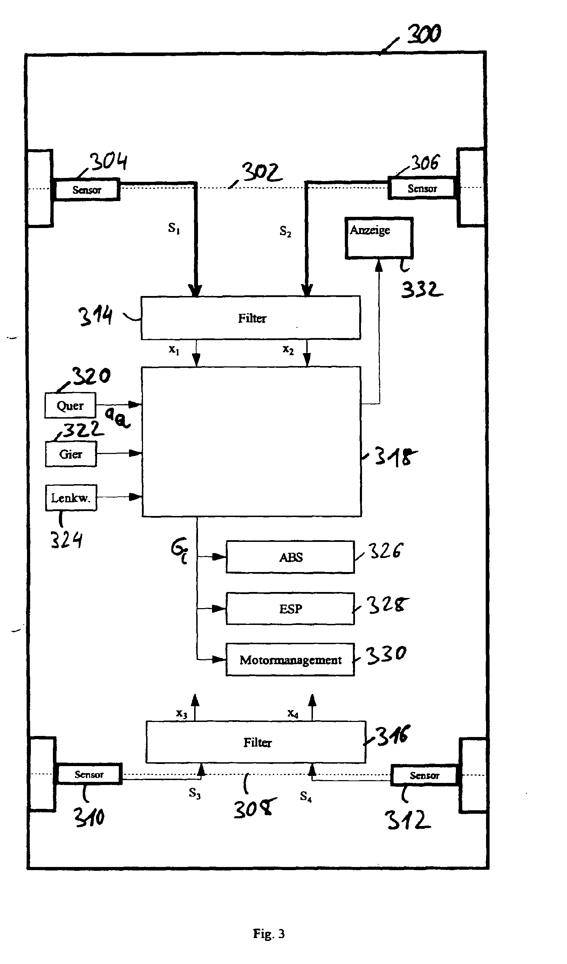

Die Figur 3 zeigt eine Prinzipdarstellung eines Kraftfahrzeugs 300. Das Kraftfahrzeug 300 hat an der linken Seite der Vorderachse 302 einen Sensor 304 und an der rechten Seite einen Sensor 306. Entsprechend hat das Kraftfahrzeug 300 an seiner Hinterachse 308 einen linken Sensor 310 und einen rechten Sensor 312. Beispielsweise kann es sich bei den Sensoren 304, 306 und 310, 312 um Höhensensoren handeln, die den Abstand der jeweiligen Achse von der Karosserie des Kraftfahrzeugs 300 messen.

Die von den Sensoren 304 und 306 ausgegebenen Signale S₁ bzw. S₂ werden in ein Filtermodul 314 eingegeben. Mit Hilfe der Signale S₁ und S₂ erzeugt das Filtermodul 314 die Signale x₁ und x₂, wobei das Signal x₁ beispielsweise proportional zu einem Wankwinkel des Kraftfahrzeugs 300 an der Vorderachse 302 und das Signal x₂ proportional zu der Wankwinkelgeschwindigkeit an der Vorderachse 302 ist.

Entsprechend werden die Signale S₃ und S₄ der Sensoren 310 bzw. 312 in ein Filtermodul 316 eingegeben, welches die Signale x₃ und x₄ ausgibt. Beispielsweise ist das Signal x₃ proportional zu einem Wankwinkel an der Hinterachse 308 und das Signal x₄ ist proportional zu der Wankwinkelgeschwindigkeit an der Hinterachse 308.

Die Signale x₁, x₂, x₃ und x₄ werden in ein Auswertemodul 318 eingegeben, welches prinzipiell gleich aufgebaut ist wie das Auswertemodul 206 der Figur 2.

Zusätzlich kann ein Sensor 320 zur Messung einer Querbeschleunigung des Kraftfahrzeugs 300 vorhanden sein. Der Sensor 320 gibt ein Signal a_{Q}, welches proportional zu der gemessenen Querbeschleunigung ist, in das Auswertemodul 318 ein. Zusätzlich kann ein Sensor 322 zur Erfassung einer Gierrate, d. h. der Drehgeschwindigkeit um die Hochachse des Fahrzeugs, vorhanden sein. Die von dem Sensor 322 ermittelten Gierraten werden in das Auswertemodul 318 eingegeben, und können dort anhand eines Fahrzeugmodells in Querbeschleunigungsdaten umgerechnet werden.

Ferner kann ein Sensor 324 zur Erfassung eines Lenkwinkels vorgesehen sein. Der Sensor 324 gibt ein dem Lenkwinkel proportionales Signal an das Auswertemodul 318 ab.

Anhand der durch die Signale x₁, x₂ und/oder x₃, x₄ und/oder a_{Q} und/oder des Ausgangssignals des Sensors 322 und/oder des Sensors 324 erfassten Fahrparameter (vergleiche Fahrparameter 204 der Figur 2) werden dann von dem Auswertemodul 318 die Prüfkriterien P₁, P₂, ..., P_{N} der Reihe nach abgearbeitet, wie oben mit Bezugnahme auf die Figuren 1 und 2 erläutert. Wenn von dem Auswertemodul 318 ein Fahrzustand Fᵢ erkannt worden ist, weil das entsprechende Prüfkriterium Pᵢ erfüllt worden ist, gibt das Auswertemodul 318 ein Signal Gᵢ ab, das den erkannten Fahrzustand Fᵢ angibt.

Das Signal Gᵢ wird beispielsweise in ein ABS-System 326, ein ESP-System 328 und/oder ein Motormanagementsystem 330 eingegeben. Alternativ oder zusätzlich kann das Signal Gᵢ auch in ein System zur adaptiven Fahrwerksregelung eingegeben werden, welches beispielsweise die Dämpfercharakteristiken des Kraftfahrzeugs 300 in Abhängigkeit von dem Signal G, nachregelt.

Von besonderem Vorteil ist hierbei, dass der gefährlichste Fahrzustand F₁ von dem Auswertemodul 318 am schnellsten erkannt wird, sodass die entsprechenden Steuerungs- und/oder Regelungssysteme, z. B. ABS-System 326 und/oder ESP-System 328 und/oder Motormanagementsystem 330, entsprechend schnell auf die Gefahrensituation reagieren können.

Alternativ oder zusätzlich kann ein entsprechendes Warnsignal über die Anzeige 332 ausgegeben werden, um den Fahrer des Kraftfahrzeugs 300 zu warnen.

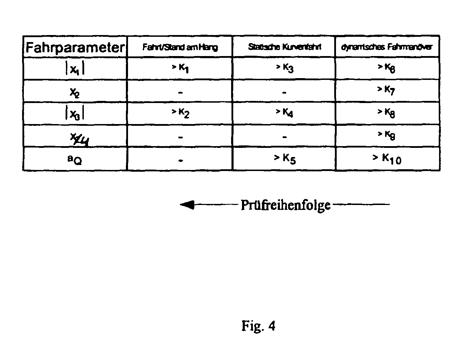

Die Figur 4 zeigt in tabellarischer Form eine Entscheidungsmatrix des Auswertemoduls 318. Die Entscheidungsmatrix ist beispielsweise in der Programmlogik des Auswertemoduls 318 abgebildet (vergleiche das Programm in dem Speicherbereich 212 der Figur 2).

In dem Anwendungsfall der Figur 4 wird zwischen drei verschiedenen Fahrzuständen unterschieden:
F₁ = Kippneigung bei dynamischem Fahrmanöver,
F₂ = Kippneigung bei quasi-statischer Kurvenfahrt,
F₃ = Kippneigung bei Fahrt oder Stand am Hang.

Das Prüfkriterium P₁ für den Fahrzustand F₁ ist wie folgt:

Der Betrag des Signals x₁ liegt oberhalb des Schwellschwerts K₆, das Signal x₂ ist oberhalb des Schwellwerts K₇, der Betrag des Signals x₃ liegt oberhalb des Schwellwerts K₈, das Signal x₄ liegt oberhalb des Schwellwerts K₉ und das Signal a_{Q} liegt oberhalb des Schwellwerts K₁₀.

Wenn sämtliche dieser Kriterien für die Fahrparameter erfüllt sind, ist das Prüfkriterium P₁ erfüllt und der Fahrzustand F₁ liegt vor.

Das Prüfkriterium P₂ für den Fahrzustand F₂ lautet wie folgt:

Der Betrag des Signals x₁ liegt oberhalb des Schwellwerts K₃, der Betrag des Signals x₃ liegt oberhalb des Schwellwerts K₄ und das Signal a_{Q} liegt oberhalb des Schwellwerts K₅. Die Signale x₂ und x₄ gehen nicht in das Prüfkriterium P₂ ein.

Da der Fahrzustand F₂ weniger kritisch als der Fahrzustand F₁ ist, können die Schwellwerte K₃, K₄ und K₅ größer als die entsprechenden Schwellwerte K₆, K₈ und K₁₀ gewählt werden.

Das Prüfkriterium P₃ für den am wenigsten gefährlichen Fahrzustand F₃ ist wie folgt:

Der Betrag des Signals x₁ liegt oberhalb des Schwellwerts K₁ und der Betrag des Signals x₃ liegt oberhalb des Schwellwerts K₂. Da der Fahrzustand F₃ weniger kritisch als der Fahrzustand F₂ ist, können die Schwellwerte K₁ und K₂ wiederum oberhalb der entsprechenden Schwellwerte K₃ und K₄ gewählt werden, d. h. es ist K₁ > K₃ > K₆ und K₂ > K₄ > K₈ und außerdem K₅ > K₁₀.

Sobald die Fahrparameter eingegeben werden, wird von dem Auswertemodul zunächst das Prüfkriterium P₁ ausgewertet, um zu prüfen, ob der Fahrzustand F₁ vorliegt. Ist dies nicht der Fall, so folgt danach die Prüfung des Prüfkriteriums P₂, und wenn auch dieses nicht erfüllt wird, schließlich die Auswertung des Prüfkriteriums P₁. Daraus ergibt sich eine Prüfreihenfolge nach abnehmender Gefährlichkeit der Fahrzustände. Wenn bei dieser Prüfreihenfolge einer der Fahrzustände Fᵢ erkannt wird, wird daraufhin ein entsprechendes Signal Gᵢ abgegeben, wie oben unter anderem mit Bezugnahme auf die Figur 3 erläutert.

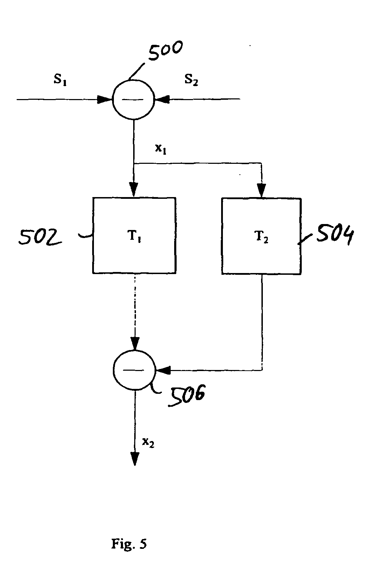

Die Figur 5 zeigt ein Beispiel für die Realisierung des Filtermoduls 314. In dieser Ausführungsform hat das Filtermodul einen Subtrahierer 500, der die Signale S₁ und S₂ voneinander subtrahiert. Das Ergebnis dieser Subtraktion ist das Signal x₁, welches proportional zu dem Wankwinkel an der Vorderachse 302 ist (vergleiche Figur 3).

Das Signal x₁ wird in die beiden Filter 502 und 504 eingegeben. Bei dem Filter 502 handelt es sich um einen so genannten Langzeitfilter, d. h. einen Tiefpass mit einer relativ großen Zeitkonstante T₁, während es sich bei dem Filter 504 um einen so genannten Kurzzeitfilter, d. h. um einen Tiefpassfilter mit einer relativ kurzen Zeitkonstante T₂ handelt. Beispielsweise liegt die Zeitkonstante T₁ im Bereich von 1 Sekunde bis 50 Sekunden und die Zeitkonstante T₂ im Bereich von 10 bis 100 Millisekunden.

Die Ausgangssignale der Filter 502 und 504 werden von dem Subtrahierer 506 voneinander subtrahiert, sodass man das Signal x₂ erhält, welches Näherungsweise proportional zu der Wankwinkelgeschwindigkeit, d. h. der Ableitung des Signals x₁ ist.

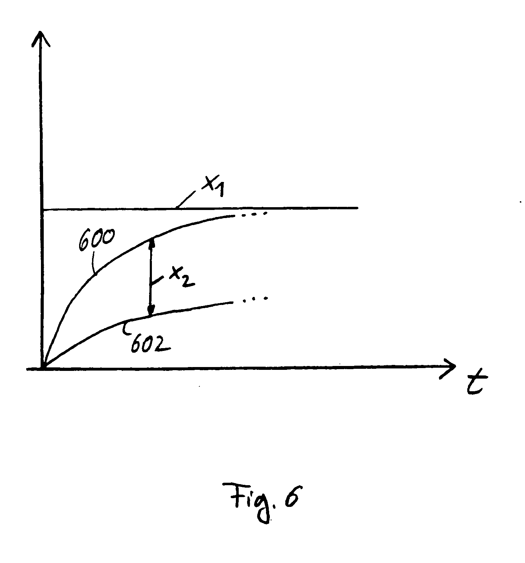

Die Funktionsweise der Ausführungsform des Filtermoduls der Figur 5 ist in der Figur 6 veranschaulicht. Die Figur 6 zeigt den zeitlichen Verlauf des Signals x₁ sowie der Signale 600 und 602, wobei es sich bei dem Signal 600 um das Ausgangssignal des Filters 504 und bei dem Signal 602 um das Ausgangssignal des Filters 502 handelt. Die Differenz dieser Signale ist das Signal x₂, welches aufgrund der unterschiedlichen Zeitkonstanten T₁ und T₂ der Filter 502 und 504 Näherungsweise die Ableitung des Signals x₁ ist.

### Bezugszeichenliste

### (Teil der Beschreibung)

- Sicherheitssystem: 200
- Sensor: 202
- Fahrparameter: 204
- Auswertemodul: 206
- Speicherbereich: 208
- Zeiger: 210
- Speicherbereich: 212
- Signal: 214
- Steuerungs- und/oder Regelungssystem: 216
- Kraftfahrzeug: 300
- Vorderachse: 302
- Sensor: 304
- Sensor: 306
- Hinterachse: 308
- Sensor: 310
- Sensor: 312
- Filtermodul: 314
- Filtermodul: 316
- Auswertemodul: 318
- Sensor: 320
- Sensor: 322
- Sensor: 324
- ABS-System: 326
- ESP-System: 328
- Motormanagementsystem: 330
- Anzeige: 332
- Subtrahierer: 500
- Filter: 502
- Filter: 504
- Subtrahierer: 506
- Signal: 600
- Signal: 602

## Patentansprüche

1. Verfahren zur Erkennung eines Fahrzustandes Fi eines Fahrzeuges, wobei eine Menge von Fahrzuständen F = {F1, F2,....,FN} definiert ist, die zumindest einen ersten Fahrzustand F1 mit einer Kippneigung bei einem dynamischen Fahrmanöver und einen zweiten Fahrzustand F2 mit einer Kippneigung bei einer quasi-statischen Kurvenfahrt beinhaltet, und
- die Fahrzustände hinsichtlich ihrer Gefährlichkeit in einer Reihenfolge von F1 bis FN sortiert sind und der gefährlichste Fahrzustand der Fahrzustand F1 ist, und
- jedem Fahrzustand Fi ein Prüfkriterium Pi zugeordnet ist,
- jedem Prüfkriterium Pi jeweils festgelegte Kriterien für mehrere jeweils bestimmte Fahrparameter zugeordnet sind, wobei ein Prüfkriterium Pi erfüllt ist und der Fahrzustand Fi vorliegt, wenn sämtliche festgelegten Kriterien für die bestimmten Fahrparameter erfüllt sind,
in folgenden Verfahrensschritten:
- es wird das Prüfkriterium Pi (i= 1,2, ...., N) ausgewertet, um zu prüfen, ob der Fahrzustand Fi vorliegt, wobei zuerst das Prüfkriterium P1 ausgewertet wird und danach die Auswertung der Prüfkriterien Pi in der Reihenfolge fortgesetzt wird, die durch die Reihenfolge der Fahrzustände Fi vorgegeben ist
- die Auswertung wird solange durchgeführt, bis einer der Fahrzustände Fi erkannt ist oder bis festgestellt worden ist, dass keiner der Fahrzustände Fi vorliegt.

2. Verfahren nach Anspruch 1, wobei die Menge von Fahrzuständen einen dritten Fahrzustand F3 mit einer Kippneigung bei Fahrt entlang eines Hangs oder Stand an einem Hang beinhaltet.

3. Verfahren nach einem der vorhergehenden Ansprüche 1 oder 2, wobei die Fahrparameter Wankwinkel, Wankgeschwindigkeit, Querbeschleunigung, Gierrate, Radaufstandskraft und/oder Lenkwinkel erfasst werden.

4. Verfahren nach einem der vorhergehenden Ansprüche 1 bis 3, wobei die Menge von Fahrzuständen zumindest den ersten Fahrzustand F1 und den zweiten Fahrzustand F2 beinhaltet, dem ersten Fahrzustand F1 ein erster Schwellwert als Prüfkriterium zugeordnet ist, und dem zweiten Fahrzustand F2 ein zweiter Schwellwert als Prüfkriterium zugeordnet ist, wobei der erste Fahrzustand F1 gefährlicher als der zweite Fahrzustand F2 ist, und der erste Schwellwert unterhalb des zweiten Schwellwerts liegt.

5. Verfahren nach einem der vorhergehenden Ansprüche 1 bis 4, wobei es sich bei dem Fahrparameter um einen Wankwinkel handelt, und der Wankwinkel durch Auswertung der Signale von Höhensensoren, die den Abstand eines Fahrzeugaufbaus von einer Radachse messen, ermittelt wird.

6. Verfahren nach Anspruch 5, wobei eine Wankwinkelgeschwindigkeit durch Filterung des Wankwinkels durch erste und zweite Filter unterschiedlicher Zeitkonstanten als Fahrparameter ermittelt wird.

7. Verfahren nach einem der vorhergehenden Ansprüche 1 bis 6, wobei bei Erkennung eines Fahrzustands ein Warnsignal ausgegeben wird, insbesondere ein haptisches, akustisches und/oder visuelles Warnsignal.

8. Verfahren nach einem der vorhergehenden Ansprüche 1 bis 7, wobei nach Erkennung einer der Fahrzustände ein Signal an ein Fahrzeugsteuerungs- und/oder Regelungssystem abgegeben wird.

## Claims

1. Method for detecting a driving state Fi of a vehicle, wherein a set of driving states F = {F1, F2, ..., FN} is defined which includes at least a first driving state F1 with a tendency to tilt during a dynamic driving manoeuvre and a second driving state F2 with a tendency to tilt during quasi-static cornering, and
- the driving states are classified in a sequence of F1 to FN in terms of their dangerousness and the most dangerous driving state is the driving state F1, and
- each driving state Fi is assigned a check criterion Pi,
- each check criterion Pi is respectively assigned defined criteria for a plurality of respectively determined driving parameters, wherein a check criterion Pi is met and the driving state Fi is present if all the defined criteria for the specific driving parameters are met,
in the following method steps:
- the check criterion Pi (i = 1, 2, ..., N) is evaluated in order to check whether the driving state Fi is present, in which the check criterion P1 is evaluated first and then the evaluation of the check criteria Pi is continued in the order which is predefined by the order of the driving states Fi, and
- the evaluation is carried out until one of the driving states Fi is detected or until it has been determined that none of the driving states Fi is present.

2. Method according to Claim 1, wherein the set of driving states includes a third driving state F3 with a tendency to tilt when driving along an incline or when stationary on an incline.

3. Method according to one of the preceding Claims 1 or 2, wherein the driving parameters of rolling angle, rolling speed, transverse acceleration, yaw rate, wheel contact force and/or steering angle are recorded.

4. Method according to one of the preceding Claims 1 to 3, wherein the set of driving states includes at least the first driving state F1 and the second driving state F2, the first driving state F1 is assigned a first threshold value as check criterion, and the second driving state F2 is assigned a second threshold value as check criterion, wherein the first driving state F1 is more dangerous than the second driving state F2, and the first threshold value is below the second threshold value.

5. Method according to one of the preceding Claims 1 to 4, wherein the driving parameter is a rolling angle and the rolling angle is determined by evaluating the signals of height sensors which measure the distance of a vehicle body from a wheel axle.

6. Method according to Claim 5, wherein a rolling angle speed is determined by filtering the rolling angle by means of first and second filters with different time constants as the driving parameters.

7. Method according to one of the preceding Claims 1 to 6, wherein, when a driving state is detected, a warning signal is output, in particular a haptic, acoustic and/or visual warning signal.

8. Method according to one of the preceding Claims 1 to 7, wherein, after one of the driving states is detected, a signal is output to a vehicle open-loop and/or closed-loop control system.

## Revendications

1. Procédé pour reconnaître l'état de déplacement Fi d'un véhicule, un ensemble d'états de déplacement F = {F1, F2, ..., FN} étant définie, lequel comprend au moins un premier état de déplacement F1 avec une inclinaison de basculement lors d'une manoeuvre de déplacement dynamique et un deuxième état de déplacement F2 avec une inclinaison de basculement lors d'une trajectoire en virage quasiment statique, et
- les états de déplacement étant triés dans un ordre de F1 à FN en fonction de leur caractère dangereux et l'état de déplacement le plus dangereux étant l'état de déplacement F1, et
- un critère de contrôle Pi étant associé à chaque état de déplacement Fi,
- des critères fixes pour plusieurs paramètres de déplacement à chaque fois donnés étant associés à chaque critère de contrôle Pi, un critère de contrôle Pi étant rempli et l'état de déplacement Fi étant présent lorsque tous les critères définis pour les paramètres de déplacement donnés sont remplis,
le procédé comprenant les étapes suivantes :
- évaluation du critère de contrôle Pi (i = 1, 2, ..., N) pour vérifier s'il y a présence de l'état de déplacement Fi, le critère de contrôle P1 étant évalué en premier et l'évaluation des critères de contrôle Pi se poursuivant ensuite dans l'ordre qui est prédéfini par l'ordre des états de déplacement Fi,
- poursuite de l'évaluation jusqu'à détecter l'un des états de déplacement Fi ou jusqu'à constater qu'aucun des états de déplacement Fi n'est présent.

2. Procédé selon la revendication 1, l'ensemble d'états de déplacement comprenant un troisième état de déplacement F3 avec une inclinaison de basculement lors d'un déplacement en pente ou lors d'un arrêt en pente.

3. Procédé selon l'une des revendications précédentes 1 ou 2, les paramètres de déplacement angle de roulis, vitesse de roulis, accélération transversale, taux de lacet, force de contact des roues et/ou angle de direction étant acquis.

4. Procédé selon l'une des revendications précédentes 1 ou 3, l'ensemble d'états de déplacement contenant au moins le premier état de déplacement F1 et le deuxième état de déplacement F2, une première valeur de seuil étant associée au premier état de déplacement F1 en tant que critère de contrôle et une deuxième valeur de seuil étant associée au deuxième état de déplacement F2 en tant que critère de contrôle, le premier état de déplacement F1 étant plus dangereux que le deuxième état de déplacement F2 et la première valeur de seuil étant inférieure à la deuxième valeur de seuil.

5. Procédé selon l'une des revendications précédentes 1 ou 4, le paramètre de déplacement étant un angle de roulis et l'angle de roulis étant déterminé par une évaluation des signaux de capteurs de hauteur qui mesurent l'écart entre une carrosserie de véhicule et un essieu.

6. Procédé selon la revendication 5, une vitesse angulaire de roulis faisant office de paramètre de déplacement étant déterminée par filtrage de l'angle de roulis par un premier et un deuxième filtres ayant des constantes de temps différentes.

7. Procédé selon l'une des revendications précédentes 1 ou 6, un signal d'alerte étant délivré en cas de détection d'un état de déplacement, notamment un signal sensoriel, sonore et/ou visuel.

8. Procédé selon l'une des revendications précédentes 1 ou 7, un signal étant délivré à un système de commande et/ou de régulation du véhicule après avoir détecté l'un des états de déplacement.
